# EUROPEAN PATENT APPLICATION

(11) **EP 4 797 575 A1**
(43) Date of publication of application: **26.08.2026**
(21) Application number: 25159435.4
(22) Date of filing: 21.02.2025
(51) Int. Cl.: H04B 10/61, H04B 10/69, H04B 10/2569

(54) **APPARATUS AND METHOD FOR POLARIZATION SENSING**

(71) Applicant: Nokia Solutions and Networks Oy, 02610 Espoo (FI)
(72) Inventor: VAN ROMPAEY, Robbe, 2018 Antwerp (BE); LANNEER, Wouter, 2018 Antwerp (BE); BREYNE, Laurens, 2018 Antwerp (BE)
(74) Representative: Zinsinger, Norbert

(57) **Abstract**

The present invention discloses an apparatus (200) for use by a coherent receiver, comprising means for: obtaining a first set of coefficients (***w**⁺*, ***A***⁺⁺) indicating a first filter (***w**, **A***) in an adaptive equalizer of the coherent receiver, wherein the first filter (***w**, **A***) is an adaptive Multi-Input Multi-Output, MIMO, filter with N taps in each branch, wherein N is an integer number; determining a further set of coefficients (*fₓₓ, f_{yx}, f_{xy}, f_{yy}*) indicating a MIMO filter with a single tap in each branch based on the first set of coefficients (***w***⁺, ***A***⁺⁺); determining a first matrix (***F***) based on the further set of coefficients (*fₓₓ, f_{yx}, f_{xy}, f_{yy}*); orthogonalizing the first matrix (***F***), thereby obtaining an orthogonalized matrix (***Q***); determining a state-of-polarization based on at least part of the orthogonalized matrix (***Q***).

## Description

### Field of the invention

Various example embodiments relate to communication technology, specifically to optical network.

### Background

Conventionally, passive optical network (PON) is based on intensity-modulation/direct detection (IM/DD) technology, because of its simple optical-frontend design and low-cost. However, with an increasing demand in the data rate of PON, it will be very challenging to design future high speed PON system based on IM-DD with data rates of 200Gbit/s and beyond using a single wavelength channel because of various limitations.

In-phase and quadrature modulation (IQM) and coherent reception is considered as a potential solution for long-reach (e.g., >40 km) and Very High Speed PON (VHSP) with data rates exceeding 100 Gbit/s. The high spectral efficiency enables high data rates, while the coherent reception offers improved sensitivities and the ability to fully compensate channel impairments like chromatic dispersion (CD). Coherent PON (CohPON) may allow for higher split ratios and longer fiber reaches due to the improved sensitivity over IM/DD. The ability to effectively compensate CD allows CohPON to operate in the C-band, where more optical spectrum is available.

With the introduction of more premium services for business users and mobile transport over Passive Optical Networks (PONs), real-time fiber sensing is attracting a lot of attention for network monitoring, fault detection and digital twin use cases. As a result, Distributed Fiber Optic Sensing (DFOS) has been added to the scope of the next-generation Very High Speed PON (VHSP) standardization project in ITU-T Q2/15 in 2023. Several standard contributions have been discussing the use cases, requirements, and feasible technologies for optical distribution network (ODN) sensing.

One main sensing technique, called "feedforward sensing" in ITU-T Q2/15, consists of state-of-polarization (SOP) monitoring at the output of a fiber cable. It can be used to sense mechanical vibrations and tension, such as bending, twisting, induced on the fiber. SOP sensing can simply be integrated with coherent transceivers for data communication, since coherent receivers typically estimate the SOP inherently in their digital signal processing (DSP) chain. Specifically, the SOP information may be extracted from the channel equalization block without interrupting data transmission.

The accuracy of SOP extraction from the coherent receiver's DSP directly impacts the capabilities of fiber sensing.

Thus, there is thus a need to improve the accuracy of extracted SOP information from coherent receivers.

### Summary of the Invention

The invention is set out in the appended set of claims.

According to a first aspect of the invention, there is provided an apparatus for use by a coherent receiver, comprising means for obtaining a first set of coefficients (***w***⁺, ***A***⁺⁺) indicating a first filter ***(w,A)*** in an adaptive equalizer of the coherent receiver, wherein the first filter (***w**, **A***) is an adaptive Multi-Input Multi-Output, MIMO, filter with N taps in each branch, wherein N is an integer number; determining a further set of coefficients (*fₓₓ, f_{yx}, f_{xy}, f_{yy}*) indicating a MIMO filter with a single tap in each branch based on the first set of coefficients (***w***⁺, ***A***⁺⁺); determining a first matrix (F) based on the further set of coefficients (*fₓₓ, f_{yx}, f_{xy}, f_{yy}*); orthogonalizing the first matrix (F), thereby obtaining an orthogonalized matrix **(Q);** determining a state-of-polarization based on at least part of the orthogonalized matrix **(Q).**

According to a second aspect of the invention, there is provided a method, comprising: obtaining a first set of coefficients (***w***⁺, ***A***⁺⁺) indicating a first filter **(w,A)** in an adaptive equalizer of the coherent receiver, wherein the first filter ***(w,A)*** is an adaptive Multi-Input Multi-Output, MIMO, filter with N taps in each branch, wherein N is an integer number; determining a further set of coefficients (*fₓₓ, f_{yx}, f_{xy}, f_{yy}*) indicating a MIMO filter with a single tap in each branch based on the first set of coefficients (***w***⁺, ***A***⁺⁺); determining a first matrix **(F)** based on the further set of coefficients (*fₓₓ, f_{yx}, f_{xy}, f_{yy}*); orthogonalizing the first matrix **(F),** thereby obtaining an orthogonalized matrix **(Q);** determining a state-of-polarization based on at least part of the orthogonalized matrix **(Q).**

According to a third aspect of the invention, there is provided a computer program comprising instructions for causing an apparatus to perform at least the following: obtaining a first set of coefficients (***w***⁺, ***A***⁺⁺) indicating a first filter ***(w,A)*** in an adaptive equalizer of the coherent receiver, wherein the first filter ***(w, A)*** is an adaptive Multi-Input Multi-Output, MIMO, filter with N taps in each branch, wherein N is an integer number; determining a further set of coefficients (*fₓₓ, f_{yx}, f_{xy}, f_{yy}*) indicating a MIMO filter with a single tap in each branch based on the first set of coefficients (***w***⁺, ***A***⁺⁺); determining a first matrix **(F)** based on the further set of coefficients (*fₓₓ, f_{yx}, f_{xy}, f_{yy}*); orthogonalizing the first matrix **(F),** thereby obtaining an orthogonalized matrix **(Q);** determining a state-of-polarization based on at least part of the orthogonalized matrix **(Q).**

According to a fourth aspect of the invention, there is provided an apparatus comprising at least one processor and at least one memory including computer program code, the at least one memory and the computer program code configured to with the at least one processor, cause the apparatus at least to perform: obtaining a first set of coefficients (***w***⁺, ***A***⁺⁺) indicating a first filter ***(w, A)*** in an adaptive equalizer of the coherent receiver, wherein the first filter ***(w, A)*** is an adaptive Multi-Input Multi-Output, MIMO, filter with N taps in each branch, wherein N is an integer number; determining a further set of coefficients (*fₓₓ, f_{yx}, f_{xy}, f_{yy}*) indicating a MIMO filter with a single tap in each branch based on the first set of coefficients (***w***⁺, ***A***⁺⁺); determining a first matrix **(F)** based on the further set of coefficients (*fₓₓ, f_{yx}, f_{xy}, f_{yy}*); orthogonalizing the first matrix **(F),** thereby obtaining an orthogonalized matrix **(Q);** determining a state-of-polarization based on at least part of the orthogonalized matrix ***(Q).***

According to a fifth aspect of the invention, there is provided a non-transitory computer readable medium comprising program instructions for causing an apparatus to perform at least the following: obtaining a first set of coefficients (***w***⁺, ***A***⁺⁺) indicating a first filter (***w**, **A***) in an adaptive equalizer of the coherent receiver, wherein the first filter ***(w,A)*** is an adaptive Multi-Input Multi-Output, MIMO, filter with N taps in each branch, wherein **N** is an integer number; determining a further set of coefficients (*fₓₓ, f_{yx}, f_{xy}, f_{yy}*) indicating a MIMO filter with a single tap in each branch based on the first set of coefficients (***w***⁺, ***A***⁺⁺); determining a first matrix **(F)** based on the further set of coefficients (*fₓₓ, f_{yx}, f_{xy}, f_{yy}*); orthogonalizing the first matrix **(F),** thereby obtaining an orthogonalized matrix **(Q);** determining a state-of-polarization based on at least part of the orthogonalized matrix **(Q).**

According to a sixth aspect of the invention, there is provided a computer readable medium comprising program instructions for causing an apparatus to perform at least the following: obtaining a first set of coefficients (***w***⁺, ***A***⁺⁺) indicating a first filter ***(w,A)*** in an adaptive equalizer of the coherent receiver, wherein the first filter ***(w,A)*** is an adaptive Multi-Input Multi-Output, MIMO, filter with **N** taps in each branch, wherein N is an integer number; determining a further set of coefficients (*fₓₓ, f_{yx}, f_{xy}, f_{yy}*) indicating a MIMO filter with a single tap in each branch based on the first set of coefficients (***w***⁺, ***A***⁺⁺); determining a first matrix **(F)** based on the further set of coefficients (*fₓₓ, f_{yx}, f_{xy}, f_{yy}*); orthogonalizing the first matrix **(F),** thereby obtaining an orthogonalized matrix **(Q);** determining a state-of-polarization based on at least part of the orthogonalized matrix **(Q).**

According to the example embodiments, both Jones vectors in the first matrix **F** are exploited, the accuracy of the SOP information can be improved.

### Brief description of the figures

For a more complete understanding of example embodiments of the present invention, reference is now made to the following descriptions taken in connection with the accompanying drawings in which:
Figure 1a shows a schematic block diagram of SOP extraction according to state of the art;
Figure 1b shows a schematic diagram of an example training loop for the equalizer shown in Figure 1a;
Figure 2 shows a schematic diagram of an example application scenario of an apparatus 200 according to an example embodiment;
Figure 3 shows a schematic diagram of another example application scenario of the apparatus 200 according to another embodiment;
Figure 4 shows a flow diagram according to example methods implementing various embodiments;
Figure 5 shows an example block diagram of an apparatus 200 operating in accordance with various embodiment.

Same or similar reference numerals refer to same or similar parts or components.

### Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

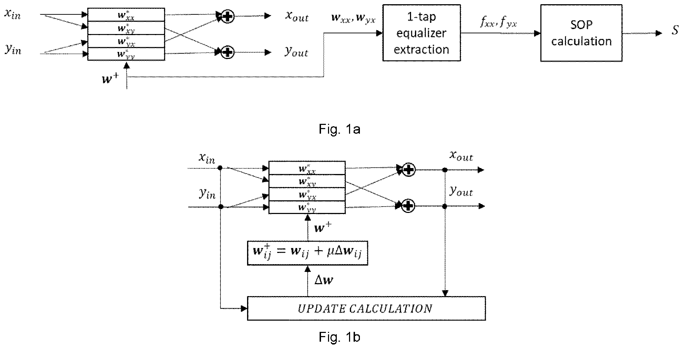

Figure 1a shows a schematic block diagram of SOP extraction according to state of the art.

For simplicity, only part of the coherent receiver is shown in the Figure 1a. A skilled person should understand that the coherent receiver may comprise further hardware and/or function blocks for its operation.

As shown in Figure 1a, a typical channel equalizer comprises a Multi-Input Multi-Output (MIMO) filter with two input ports and two output ports, namely 2×2 MIMO filter with N taps in each branch, organized in a butterfly structure: $W = \left[\begin{matrix}{w}_{xx} & {w}_{xy} \\ {w}_{yx} & {w}_{yy}\end{matrix}\right] with {w}_{ij} = \left[{w}_{ij}^{1},…,{w}_{ij}^{N}\right] .$

A skilled person should understand, the numbers of ports are merely given as an example. Specifically, for example, the 2×2 MIMO filter comprising complex valued taps shown in Figure 1 may be replaced by a 4x4 filter comprising real valued taps.

Figure 1b shows a schematic diagram of an example training loop for the equalizer shown in Figure 1a.

In the example shown in Figure 1b, the training comprises several steps. The first step is the filtering operation, which produces the output symbols {*xₒᵤₜ, yₒᵤₜ*} from the input symbols {*xᵢₙ, yᵢₙ*} as follows: ${i}_{out} \left(n\right) = {w}_{xi}^{∗} {x}_{in}^{T} \left(n\right) + {w}_{yi}^{∗} {y}_{in}^{T} \left(n\right) with i ∈ \left\{x, y\right\} .$

Where ***i**ᵢₙ*(*n*) = [*iᵢₙ*(*n*), ... , *iᵢₙ*(*n - N +* 1)] with i ∈ *{x,y},* and **w*** and ***w**^{T}* denotes the complex conjugate and transpose of **w** respectively. n denotes the symbol index and will be left out in the rest of the document for ease of notation.

The following update calculation step determines the filter updates {*Δ**w**ₓₓ, Δ**w**_{xy}*, *Δ**w**_{yx}*, *Δ**w**_{yy}*} for all four N-taps filters. For this, an error signal is computed from the output symbols {*xₒᵤₜ, yₒᵤₜ*} according to a predefined cost function. Examples are the error signals for the constant modulus algorithm (CMA) and decision-directed least mean square (DD-LMS): ${e}_{i} = \left\{\begin{matrix}{i}_{out} \left(1-{\left|{i}_{out}\right|}^{2}\right) & \left(CMA\right) \\ DD \left({i}_{out}\right) - {i}_{out} & \left(DD-LMS\right)\end{matrix}\right. i ∈ \left\{x, y\right\} .$

These error signals are correlated with the input symbols {*xᵢₙ, yᵢₙ*} to calculate the filter updates {*Δ**w**ₓₓ, Δ**w**_{xy}*, *Δ**w**_{yx}*, *Δ**w**_{yy}*} for the 4xN-taps filters: $Δ {w}_{ij} = {i}_{in} {e}_{j}^{∗} i , j ∈ \left\{x, y\right\} .$

Finally, the updated filter taps $\left\{{w}_{xx}^{+}, {w}_{xy}^{+}, {w}_{yx}^{+}, {w}_{yy}^{+}\right\}$ are computed by adding a correction term to the current filter taps. This correction term is given by multiplying the filter updates {*Δ**w**ₓₓ, Δ**w**_{xy}*, *Δ**w**_{yx}*, *Δ**w**_{yy}*} with a stepsize *µ*: ${w}_{ij}^{+} = {w}_{ij} + μ Δ {w}_{ij} i , j ∈ \left\{x, y\right\} .$

This training loop is continuously executed, due to the time-variant effects in the channel.

Generally, various training methods may be implemented to determine the evolution of a first set of coefficients ***w***⁺ over time from which time information, like the evolution of SOP parameters over time can be derived.

Reference is made back to Figure 1a, the 1-tap equalizer extraction step may comprise extracting a matrix **F** based on **W** such that $F = \left[\begin{matrix}{f}_{xx} & {f}_{xy} \\ {f}_{yx} & {f}_{yy}\end{matrix}\right] ,$

where all elements of **F** are single-tap coefficients. Typically, *fᵢⱼ* (with *i, j* ∈ *{x,y})* is computed as the mean value of filter ***w**ᵢⱼ* corresponding to the DC value of ***w**ᵢⱼ* (for all 4 components xx/xy/yx/yy). Alternatively, the dominant tap of ***w**ᵢⱼ* with highest energy can be selected.

Prior art assumes that the columns of **F** correspond to the Jones vectors from which the Stokes parameters (*S*₁, *S*₂, *S*₃) can be computed. The Stokes parameters ${S}_{x} = \left({S}_{0}^{x}, {S}_{1}^{x}, {S}_{2}^{x}, {S}_{3}^{x}\right)$ are given here for the first column of **F** using *fₓₓ* and *f_{yx}* in below formulas: ${S}_{0}^{x} = {\left|{f}_{xx}\right|}^{2} + {\left|{f}_{yx}\right|}^{2}$ ${S}_{1}^{x} = \frac{{\left|{f}_{xx}\right|}^{2} - {\left|{f}_{yx}\right|}^{2}}{{S}_{0}}$ ${S}_{2}^{x} = \frac{2 Re \left({f}_{yx}{f}_{xx}^{∗}\right)}{{S}_{0}}$ ${S}_{3}^{x} = \frac{- 2 Im \left({f}_{yx}{f}_{xx}^{∗}\right)}{{S}_{0}} .$ where *Re(f)* and *Im(f)* denotes the real and imaginary component of *f* respectively.

In addition, the SOP can also be calculated using the coefficients *f_{xy}* and *f_{yy}* yielding ***S**_{y},* because the rotating speeds of polarizations X and Y are the same (in theory). Furthermore, a post moving average filter applied to the Stokes parameter may enhance accuracy.

In the present disclosure, the Stokes parameters are given as an example of polarization measure information. Other polarization measures than Stokes parameter, like the Jones matrix or Mueller matrix, can also be extracted in a similar way.

A disadvantage in the state-of-the-art SOP extraction techniques explained above is that it uses only a single column of the 1-tap equalizer F and ignore any orthogonalization inaccuracies between both columns. The polarizations of an optical wave are orthogonal which should hence be reflected in the demuxing process. Consider following illustrative example where a single-tap filter *W* (hence *W = F)* is tracking a real-valued rotation on the fiber which is modeled here as the matrix ***R**_{θ}* and the to-be extracted sensing parameter is *θ* ${R}_{θ} = \left[\begin{matrix}cos \left(θ\right) & - sin \left(θ\right) \\ sin \left(θ\right) & cos \left(θ\right)\end{matrix}\right] .$

Filter tracking inaccuracies of *W* results in noisy filter updates such that *W* will have columns which are non-orthogonal, whereas true rotation matrices are orthogonal, $W = \left[\begin{matrix}cos \left(θ\right) + {n}_{xx} & - sin \left(θ\right) + {n}_{xy} \\ sin \left(θ\right) + {n}_{yx} & cos \left(θ\right) + {n}_{yy}\end{matrix}\right] .$

This will in turn degrade the accuracy of *θ* estimation. Note that polarization scrambling in coherent transmission corresponds to complex-valued rotation matrices in fact. Thus, the equalizer filter adaptation process may result in an equalizer matrix **W** which is non-orthogonal, either due to estimation inaccuracies described above; or due to it is compensating for impairments resulting in non-orthogonal filter values. Various embodiments provide a projection step that orthogonalizes **W** between both columns to obtain more robust sensing parameters.

The estimation of the Stokes parameters can be made more robust by computing the Stokes parameter twice for each column of F and averaging the values of both estimations. This reduces the estimation noise on average with 3dB in theory. However, this method may achieve suboptimal results when having for instance stronger impairments on X than Y polarization, e.g. due to hardware non-idealities. Moreover, prior art works often explicitly mention using a single column of **F** only.

In addition, it has been taught in prior art to apply a moving average smoothing to the computed Stokes parameter across consecutive samples to reduce the noise levels in the SOP estimation. A first drawback is that such moving average smoothing reduces the maximum speed of fast polarization rotations that can be tracked. There is a tradeoff between accuracy and maximum rotation speed when applying averaging. Secondly, in many cases external SOP monitoring systems accessing the equalizer coefficients of a commercial hardware are limited by the reading speed. Relatively low reading speeding rates of 10s of Hz are common. In such cases, computing moving averages across non-consecutive samples is not feasible.

Coherent PON is expected to work at low SNR due to the high required optical budget and may utilize simplified and/or less performant coherent schemes and components to decrease the cost, e.g., using lasers with a higher linewidth, lower bandwidth electro-optic components, etc. Furthermore, as PON is a shared medium, the upstream may suffer from higher noise levels compared to point-to-point links due to undesired noise emissions of non-transmitting ONUs. Hence, the channel equalizer will suffer from noisy filter updates and other channel impairments that need to be tracked which decreases the SOP extraction accuracy.

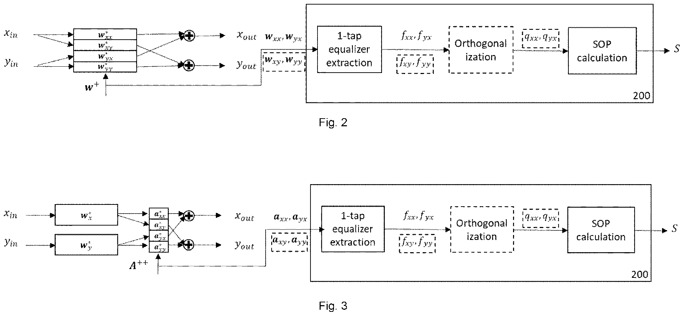

Figure 2 shows a schematic diagram of an example application scenario of an apparatus 200 according to an example embodiment.

In the embodiment shown in Figure 2, the apparatus 200 may be implemented in the coherent receiver. In another example, the apparatus 200 may also be implemented outside the coherent receiver and communicatively connected to the coherent receiver. The coherent receiver may be implemented at an ONU or at an OLT. A skilled person should understand that only part of the coherent receiver is shown in the Figure 2. The coherent receiver may comprise further hardware and/or function blocks for its operation.

Specifically, the apparatus 200 may be implemented in an equalizer comprising a MIMO filter **w** with N taps in each branch, for example as described above with respect to Figure 1. For simplicity, function blocks same or similar as described with respect to previous Figures will not be repeated. The difference between the apparatus 200 and Figure 1 are marked in dashed blocks in Figure 2.

The apparatus 200 is implemented to determine state-of-polarization (SOP) based on all columns of the first set of coefficients ***w***⁺ indicating the first filter **w.**

The apparatus 200 is configured to obtain a first set of coefficients ***w***⁺ indicating a first filter **w** in an adaptive equalizer of the coherent receiver.

Specifically, in the embodiments shown in Figure 2, the first set of coefficients ***w***⁺ may be obtained from the equalizer of the coherent receiver.

In another example, the first set of coefficients ***w***⁺ may be determined by the apparatus 200. For example, the training loop as explained with respect to Figure 1b may also be implemented as part of the apparatus 200.

The apparatus 200 is configured to determine a further set of coefficients *fₓₓ, f_{yx}, f_{xy}, f_{yy}* indicating a MIMO filter with a single tap in each branch based on the first set of coefficients ***w***⁺. The further set of coefficients *fₓₓ, f_{yx}, f_{xy}, f_{yy}* is no longer bold since it represents a single scalar.

Specifically, *fₓₓ* represents a measure for the contribution of the x input polarization to the x output polarization, *f_{yy}* represents a measure for the contribution of the y input polarization to the y output polarization, *f_{xy}* represents a measure for the contribution of the x input polarization to the y output polarization, *f_{yx}* represents a measure for the contribution of the y input polarization to the x output polarization.

Specifically, in one embodiment, the further set of coefficients *fₓₓ, f_{yx}, f_{xy}, f_{yy}* may comprises coefficients of a dominant tap selected in each branch from the first set of coefficients ***w***⁺. In another embodiment, the further set of coefficients may comprise coefficients indicating respective average value across taps in each branch of the first set of coefficients.

The apparatus 200 is configured to determine a first matrix F based on the further set of coefficients.

In one example, the first matrix F may directly represent the MIMO filter with a single tap. In the example as shown in Figure 2, $F = \left[\begin{matrix}{f}_{xx} & {f}_{xy} \\ {f}_{yx} & {f}_{yy}\end{matrix}\right]$

**In** another example, the first matrix F may be determined based on the further set of coefficients *fₓₓ, f_{yx}, f_{xy}, f_{yy}* in other ways. **In** one embodiment, the apparatus 200 may be configured to determine the first matrix F based on the further set of coefficients by filtering the further set of coefficients in each branch across time.

Specifically, pre-filters such as moving average, low pass filter may be implemented to the matrix F for additional noise robustness.

**In** one embodiment, the apparatus 200 may be configured to determine the first matrix **F** by calculating moving average of the further set of coefficients in each branch based on exponential smoothing with a forgetting factor λ.

As an example, moving average may be computed as follows. $F \left(t\right) = λ F \left(t-1\right) + \left(1-λ\right) {F}_{new} .$ Where ***F**_{new}* is the newly obtained first matrix from the first set of coefficients ***w***⁺ or ***A***⁺⁺ as will be explained later with respect to Figure 3. The forgetting factor *λ* may be selected as a value close to 1.

The apparatus 200 is implemented to orthogonalize the first matrix **F,** thereby obtaining an orthogonalized matrix **Q.**

Specifically, in one embodiment, the apparatus 200 may be implemented to orthogonalize the first matrix **F** by determining an orthogonal matrix approximately closest to the first matrix **F,** for example with respect to a matrix norm such as the Frobenius norm, as the orthogonalized matrix **Q.**

The orthogonalized matrix may be obtained as the solution of following optimalization problem ${min}_{Q} {\left‖F-Q\right‖}_{F} s . t . {Q}^{H} Q = {I}_{2} .$ Where ∥***B***∥*_{F}* denotes the Frobenius norm of the matrix **B.**

In one embodiment, the apparatus 200 may be implemented to orthogonalize the first matrix **F** by determining a singular value decomposition, SVD, of the first matrix **F** as the orthogonalized matrix **Q.** $Q = \left[\begin{matrix}{q}_{xx} & {q}_{yx} \\ {q}_{xy} & {q}_{yy}\end{matrix}\right] = U {V}^{H} with US {V}^{H} = SVD \left(F\right) .$

Although computing SVDs requires in general complex iterative procedures, the complexity is significantly reduced for small 2x2 matrices. For such cases, a closed-form solution can be derived, which takes a fixed number of steps to compute the solution. One example is given in https://sites.ualberta.ca/~mlipsett/ENGM541/Readings/svd_ellis.pdf.

In other examples, other projection methods using e.g. Gram-Schmidt's or Löwdin's orthogonalization procedures may be used.

In addition, for SOP monitoring systems with relative low sampling speeds, e.g. tens of Hz are common, these orthogonalization procedures needs to be performed only at slow rates.

Alternatively, in yet another example, the apparatus 200 may be implemented to orthogonalize the first matrix **F** by determining the orthogonalized matrix (Q) as: $Q = \frac{1}{γ} \left[\begin{matrix}α & - {β}^{∗} \\ β & {α}^{∗}\end{matrix}\right]$
where $α = \frac{\left({f}_{xx}+{f}_{yy}^{∗}\right)}{2} , β = \frac{\left({f}_{yx}-{f}_{xy}^{∗}\right)}{2} and {γ}^{2} = {\left|α\right|}^{2} + {\left|β\right|}^{2} .$

This very simple orthogonalization procedure is in general not the optimal solution to the Frobenius-norm based orthogonalization problem but turns out to give similar improvements on the SOP calculation.

It is cheaper to use these two formulas in combination with computing the Stokes parameters only once, than the prior art scheme where the Stokes parameters are calculated twice for both polarizations and subsequently averaged. This may be of interest for commercial hardware that calculates the Stokes parameters internally at high speeds. In addition, various embodiments will ensure optimal performance for strong non-ideal channel impairments.

After orthogonalization, the apparatus 200 is implemented to determine a SOP based on at least part of the orthogonalized matrix Q. Specifically, the SOP may be represented by at least one of: Stokes parameters, Jones vector, and Mueller matrix, etc.

In one embodiment, the apparatus 200 may be implemented to determine the SOP based on one column of the orthogonalized matrix, for example [*qₓₓ, q_{yx}*] for the X polarization, because the Stokes parameters for the orthogonal Y polarization will give exactly the same numerical value. Similar formulas for determining Stokes parameters may be used with *qₓₓ* and *q_{yx}* replacing *fₓₓ* and *f_{yx}* respectively in the formulas mentioned above. In another example, the apparatus 200 may be implemented to determine the SOP based on all elements [*qₓₓ, q_{yx}, q_{xy}, q_{yy}*] of the orthogonalized matrix. For example, the SOP can be calculated for both columns of **Q.** and then the number can be averaged.

Figure 3 shows a schematic diagram of another example application scenario of the apparatus 200 according to another embodiment.

In the example shown in Figure 3, the adaptive equalizer comprises two sub-filters. Specifically, one sub-filter, denoted as POL-filter **A,** is configured to reduce at least part of PMD in the equalizer and may comprise a Multi-Input Multi-Output (MIMO) filter with M filter taps in each branch. The other sub-filter, denoted as ISI-filter **w,** is configured to reduce at least part of the ISI in the equalizer and may comprise two Single-Input Single-Output (SISO) filters respectively with N taps. N and M are integer numbers. The complexity of the equalizer is significantly reduced when M<<N comparing to the 4xN-taps full butterfly filter as shown in Figures 1 and 2.

Specifically, the ISI-filter w without cross taps reduces the complexity of the ISI-filter with approximately a factor 2, compared to a 4xN-taps full butterfly filter and allows the ISI-filter to compensate for effects like chromatic dispersion (CD) and bandwidth (BW) limitations. The PMD is then compensated using the POL-filter **A** with cross taps.

In the example shown in Figure 3, the ISI filter is configured before the POL filter. In the following, the equalizer configuration as shown in Figure 3 may be referred as ISI-POL configuration. In another example (not shown), the POL filter may be configured before the ISI filter. Such configuration may be referred as POL-ISI configuration in the following.

Various training algorithms may be implemented to determine the first set of coefficients ***A***⁺ and the second set of coefficients ***w***⁺ to adaptively update the coefficients of the POL filter **A** and the ISI filter **w** for a next training iteration for the respective filters. The training algorithms may be implemented inside or outside apparatus 200.

Specifically, there are different methods to calculate the updates Δ***A*** and *Δ**w*** of the POL- and ISI-filter respectively. In one example, the updates may be calculated independent of each other, with thus two separate training loops for **A** and **w.** The error may be calculated directly at the output of each filter. In another example, the error may be only calculated on the output symbols. The principle of backpropagation, which is also used in the training of neural networks may be used to determine both updates.

In the example shown in Figure 3, the apparatus 200 may operate similarly as explained above with respect to Figure 2, only with a first set of coefficients coming from the POL-filter **A,** instead of coming from the full butterfly filter in Figure 2. Specifically, $A = \left[\begin{matrix}{a}_{xx} & {a}_{xy} \\ {a}_{yx} & {a}_{yy}\end{matrix}\right]$*,* wherein ${a}_{ij} = \left[{a}_{ij}^{1},…,{a}_{ij}^{M}\right]$ with *i, j* ∈ *{x,y}.*

Namely, the apparatus 200 is configured to obtain the first set of coefficients ***A***⁺⁺ indicating the POL filter and to determine the further set of coefficients *fₓₓ, f_{yx}, f_{xy}, f_{yy}* indicating a MIMO filter with a single tap in each branch based on the first set of coefficients ***A***⁺⁺.

Advantageously, in one example, the gains of the first set of coefficients ***A***⁺⁺ have a predetermined level. The apparatus 200 may be implemented to scale the gains first set of coefficients ***A***⁺⁺ to the predetermined level.

Specifically, the apparatus 200 may be further implemented to obtain a first initial set of coefficients ***A***⁺ indicating the first filter ***A*** and a second initial set of coefficients ***w***⁺ indicating a second filter **w** configured to reduce at least part of the inter-symbol interference in the adaptive equalizer,

The apparatus 200 may be further implemented to determine the first set of coefficients ***A***⁺⁺ and a second set of coefficients ***w***⁺⁺ based on the first initial set of coefficients ***A***⁺ and the second initial set of coefficients ***w***⁺, wherein the gains of the first set of coefficients ***A***⁺⁺ have a predetermined level, and wherein the output of the equalizer based on the first set of coefficients ***A***⁺⁺ and the second set of coefficients ***w***⁺⁺ is approximately same as the output of the equalizer based on the first initial set of coefficients ***A***⁺ and the second initial set of coefficients ***w***⁺.

Specifically, the gains of the first set of coefficients ***A***⁺⁺ may comprise gains corresponding to respective input ports/output ports of the first filter **A** connected to the second filter **w.** Specifically, in the example as shown in Figure 3, the gains of the first set of coefficients ***A***⁺⁺ may comprise the gains corresponding to respective input ports of the POL-filter **A.** In another example using POL-ISI configuration, the gains of the first set of coefficients ***A***⁺⁺ may comprise the gains corresponding to respective output ports of the POL-filter **A.**

More specifically, in the example as shown in Figure 3, the gain corresponding to the first input port (the one on top in Fig. 3) may be determined as the gain of the first row of the coefficient matrix of the first filter **A,** and may be estimate from the energy of a pair of direct tab coefficients and cross tab coefficients ***a**ₓₓ,* and ***a**_{xy},* corresponding to the gain from the first input port to all output ports *xₒᵤₜ, yₒᵤₜ.* Meanwhile, the gain corresponding to the second input port (the one on bottom in Fig. 3) may be determined as the gain of the second row of the coefficient matrix of the first filter **A,** and may be estimated from the energy of the other pair of direct tab coefficients and cross tab coefficients ***a**_{yx},* and ***a**_{yy},* corresponding to the gain from the second input port to all output ports*xₒᵤₜ*, *yₒᵤₜ.*

In another example using POL-ISI configuration, the gains of the first set of coefficients ***A***⁺⁺ may be determined as the gain of the columns of the coefficient matrix of the first filter **A.**

Specifically, the predetermined level for the gains of the first set of coefficients ***A***⁺⁺ may be any value, for example, 0.1, 1, 2 or 5 etc. In one embodiment, the predetermined level is 1. The processing of bringing the gains of the first set of coefficients ***A***⁺⁺ to 1, for example by scaling ***A***⁺ without significantly changing the output of the equalizer may also be referred to as jointly normalizing in the present disclosure. In one example, every gain of the first set of coefficients ***A***⁺⁺ may have a different predetermined level.

In one example, the output of the equalizer based on the first set of coefficients ***A***⁺⁺ and the second set of coefficients ***w***⁺⁺ may comprise small scaling and/or offsets compared to the output of the equalizer based on the first initial set of coefficients ***A***⁺ and the second initial set of coefficients ***w***⁺.

In one embodiment, the apparatus 200 may be configured to scale the first initial set of coefficients ***A***⁺, such that the gains corresponding to the first set of coefficients ***A***⁺⁺ reaches the predetermined level, and to scale the second initial set of coefficients ***w***⁺, such that the second set of coefficients ***w***⁺⁺ compensates the scaling of the first initial set of coefficients ***A***⁺.

Specifically, in the example shown in Figure 3, the apparatus 200 may be configured to scale ${a}_{xx}^{+}$*,* and ${a}_{xy}^{+}$ from the first initial set of coefficients ***A***⁺ using a first scale factor, and to scale ${a}_{yx}^{+}$*,* and ${a}_{yy}^{+}$ from the first initial set of coefficients ***A***⁺ using a second scale factor, thereby obtaining the first set of coefficients ***A***⁺⁺. The apparatus 200 may be configured to scale ${w}_{x}^{+}$ from the second initial set of coefficients ***w***⁺ using the reciprocal of the first scale factor, and to scale the ${w}_{y}^{+}$ from the second initial set of coefficients ***w***⁺ using the reciprocal of the second scale factor, thereby obtaining the second set of coefficients ***w***⁺⁺. In this way, the scaling of the first initial set of coefficients ***A***⁺ is compensated in the second set of coefficients ***w***⁺⁺.

More specifically, the first scale factor may be determined from ${a}_{xx}^{+}$*,* and ${a}_{xy}^{+}$*,* for example as $\frac{1}{\sqrt{{\left|{a}_{xx}^{+}\right|}^{2} + {\left|{a}_{xy}^{+}\right|}^{2}}}$. Similarly, the second scale factor may be determined from ${a}_{yx}^{+}$, and ${a}_{yy}^{+}$, for example as $\frac{1}{\sqrt{{\left|{a}_{yx}^{+}\right|}^{2} + {\left|{a}_{yy}^{+}\right|}^{2}}}$.

In another example, the joint normalization may be implemented outside the apparatus 200.

According to various embodiments, orthogonalization to the FIR filter coefficients of the butterfly equalizer is performed before SOP extraction which improves the estimation noise variance with more than 3 dB. In particular, it enhances estimation accuracy whenever impairments (due to e.g. electro-optical hardware non-idealities, Polarization Dependent Loss, Polarization Mode Dispersion, etc) result in non-orthogonal equalizer filter values. The improved accuracy enables to detect externally induced variations which have significant smaller SOP angular variation on the Pointcaré-sphere.

The orthogonalization step ensures optimal accuracy in all cases. In contrast, straightforward averaging of the Stokes parameters for X and Y polarization may result in (significant) suboptimal results whenever the equalizer is compensating for strong non-orthogonal impairments.

Various embodiments can be used as well for SOP monitoring systems limited by (relatively) slow reading speeds of the equalization coefficients by commercial hardware.

Various embodiments are advantageous for short bursts in upstream PON where averaging over time is restricted.

The small equalizer butterfly size of 2x2 in coherent transmission allows to formulate the orthogonalization step in a very low-complexity closed-form update.

For SOP monitoring systems with slow sampling speeds the orthogonalization only needs to be computed at slow rates.

Various embodiments apply to both full coherent receivers for PON, simplified coherent receivers for PON (e.g., with single-polarization detection and Alamouti-encoding which employ similar "butterfly" channel equalizers) and point-to-point technologies.

Various embodiments provide more accurate extraction of SOP information from the channel equalization block for fiber sensing use cases.

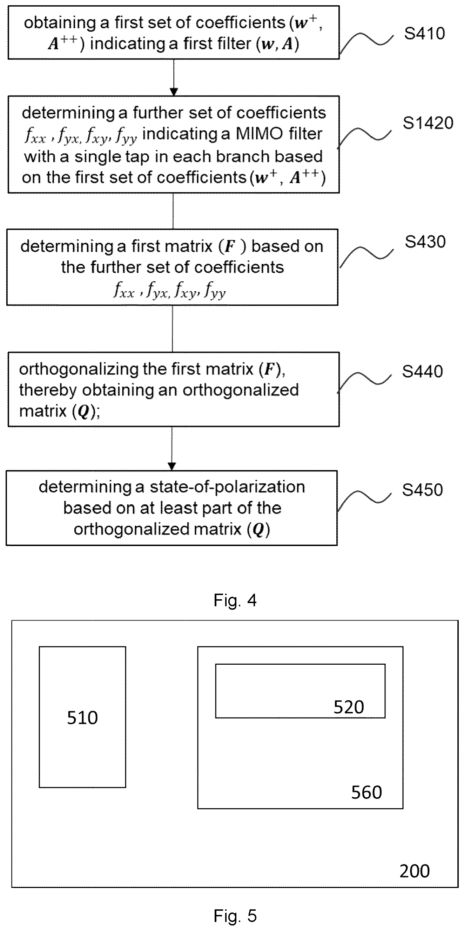

Figure 4 shows a flow diagram according to example methods implementing various embodiments.

In the example of Figure 4, all method steps may be implemented in the apparatus 200 inside the coherent transceiver. Alternatively, some of the method steps may be implemented by the coherent transceiver. and some of the method steps may be implemented for example in the apparatus 200 outside the coherent transceiver and communicatively connected to the coherent transceiver. The coherent receiver may be implemented at an ONU or at an OLT.

In Figure 4, in step S410, the method starts with obtaining a first set of coefficients (***w***⁺, ***A***⁺⁺) indicating a first filter (***w**, **A***) in an adaptive equalizer of the coherent receiver, wherein the first filter (***w**, **A***) is an adaptive Multi-Input Multi-Output, MIMO, filter with N taps in each branch, wherein N is an integer number.

In step S420, the method continues with determining a further set of coefficients indicating a MIMO filter with a single tap in each branch based on the first set of coefficients (***w***⁺, ***A***⁺⁺).

In step S430, the method continues with determining a first matrix **(F)** based on the further set of coefficients.

In step S440, the method continues with orthogonalizing the first matrix **F,** thereby obtaining an orthogonalized matrix **Q.**

In step S450, the method ends with determining a state-of-polarization based on at least part of the orthogonalized matrix **(Q).**

The procedure from S410 to S450 may be repeated, for example, every update cycle of the equalizer, every N update cycles of the equalizer, or every time the variation of the norm of A exceeds a certain threshold, etc.

Figure 5 shows an example block diagram of an apparatus 200 operating in accordance with various embodiment.

Specifically, the apparatus 200 includes a processor 510 and a memory 560. In other examples, the apparatus 200 may comprise multiple processors.

In the example of Figure 5, the processor 510 is a control unit operatively connected to read from and write to the memory 560. The processor 510 may also be configured to receive control signals received via an input interface and/or the processor 510 may be configured to output control signals via an output interface. In an example embodiment the processor 510 may be configured to convert the received control signals into appropriate commands for controlling functionalities of the apparatus.

The memory 560 stores computer program instructions 520 which when loaded into the processor 510 control the operation of the apparatus 201 as explained above. In other examples, the apparatus 201 may comprise more than one memory 560 or different kinds of storage devices.

Computer program instructions 520 for enabling implementations of example embodiments of the invention or a part of such computer program instructions may be loaded onto the apparatus 200 by the manufacturer of the apparatus, by a user of the apparatus, or by the apparatus itself based on a download program, or the instructions can be pushed to the apparatus by an external device. The computer program instructions may arrive at the apparatus via an electromagnetic carrier signal or be copied from a physical entity such as a computer program product, a memory device or a record medium such as a Compact Disc (CD), a Compact Disc Read- Only Memory (CD-ROM), a Digital Versatile Disk (DVD) or a Blu-ray disk.

According to an example embodiment, the apparatus 200 comprises means, wherein the means comprises at least one processor 510, at least one memory 560 including computer program code 520, the at least one memory 560 and the computer program code 520 configured to, with the at least one processor 510, cause the performance of the apparatus 200.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer- readable medium' may be any media or means that can contain, store, communicate, propagate or transport the instructions for use by or in connection with an instruction execution system, apparatus, or device, such as a computer, with one example of a computer described and depicted in Figure 5. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

It will be obvious to a person skilled in the art that, as the technology advances, the inventive concept can be implemented in various ways. The invention and its embodiments are not limited to the examples described above but may vary within the scope of the claims.

## Claims

1. **An apparatus** (200) for use by a coherent receiver, comprising means for:
- obtaining a first set of coefficients (***w***⁺, ***A***⁺⁺) indicating a first filter ***(w, A)*** in an adaptive equalizer of the coherent receiver, wherein the first filter ***(w, A)*** is an adaptive Multi-Input Multi-Output, MIMO, filter with N taps in each branch, wherein N is an integer number;
- determining a further set of coefficients (*fₓₓ, f_{yx}, f_{xy}, f_{yy}*) indicating a MIMO filter with a single tap in each branch based on the first set of coefficients (***w***⁺, ***A***⁺⁺);
- determining a first matrix **(F)** based on the further set of coefficients (*fₓₓ, f_{yx}, f_{xy}, f_{yy}*);
- orthogonalizing the first matrix **(F),** thereby obtaining an orthogonalized matrix **(Q);**
- determining a state-of-polarization based on at least part of the orthogonalized matrix **(Q).**

2. The apparatus (200) according to claim 1, the means are further configured for:
- orthogonalizing the first matrix **(F)** by determining an orthogonal matrix approximately closest to the first matrix **(F)** as the orthogonalized matrix **(Q).**

3. The apparatus () according to any preceding claim, the means are further configured for:
- orthogonalizing the first matrix **(F)** by determining a singular value decomposition, SVD, of the first matrix **(F)** as the orthogonalized matrix **(Q).**

4. The apparatus () according to any preceding claim, wherein the first filter (***w**, **A***) is a 2x2 or 4x4 MIMO filter.

5. The apparatus () according to any of claims 1 or 2, wherein the first filter *(w, A)* is a 2×2 MIMO filter, and the first matrix **(F)** is a 2×2 matrix $F = \left[\begin{matrix}{f}_{xx} & {f}_{xy} \\ {f}_{yx} & {f}_{yy}\end{matrix}\right]$*,* and wherein the means are further configured for:
- orthogonalizing the first matrix (F) by determining the orthogonalized matrix *(Q)* as $Q = \frac{1}{γ} \left[\begin{matrix}α & - {β}^{∗} \\ β & {α}^{∗}\end{matrix}\right]$
where $α = \frac{\left({f}_{xx}+{f}_{yy}^{∗}\right)}{2} , β = \frac{\left({f}_{yx}+{f}_{xy}^{∗}\right)}{2} and {γ}^{2} = {\left|α\right|}^{2} + {\left|β\right|}^{2} .$

6. The apparatus () according to any preceding claim, wherein the state-of-polarization is represented by at least one of: Stokes parameters, Jones vector, and Mueller matrix.

7. The apparatus () according to any preceding claim, wherein the means are further configured for:
- determining the state-of-polarization based on one column of the orthogonalized matrix (Q).

8. The apparatus () according to any preceding claim, wherein the further set of coefficients (*fₓₓ, f_{yx}, f_{xy}, f_{yy}*) comprises:
- coefficients of a dominant tap selected in each branch from the first set of coefficients (***w***⁺, ***A***⁺⁺), or
- coefficients indicating respective average value across taps in each branch of the first set of coefficients.

9. The apparatus () according to any preceding claim, wherein the means are further configured for:
- determining the first matrix (*F*) by filtering the further set of coefficients in each branch across time.

10. The apparatus () according to the preceding claim, wherein the means are further configured for:
- determining the first matrix **(*F*)** by calculating moving average of the further set of coefficients (*fₓₓ, f_{yx}, f_{xy}, f_{yy}*) in each branch based on exponential smoothing with a forgetting factor (λ).

11. The apparatus () according to any preceding claim, wherein the first adaptive filter (A) is configured to reduce at least part of the polarization mode dispersion.

12. The apparatus () according to the preceding claim, the means are further configured for:
- obtain a first initial set of coefficients (***A***⁺) indicating the first filter *(A)* and a second initial set of coefficients (***w***⁺) indicating a second filter **(w)** configured to reduce at least part of the inter-symbol interference in the adaptive equalizer,
- determining the first set of coefficients (***A***⁺⁺) and a second set of coefficients (***w***⁺⁺) based on the first initial set of coefficients (***A***⁺) and the second initial set of coefficients (***w***⁺), wherein the gains of the first set of coefficients (***A***⁺⁺) have a predetermined level, and wherein the output of the equalizer based on the first set of coefficients (***A***⁺⁺) and the second set of coefficients (***w***⁺⁺) is approximately same as the output of the equalizer based on the first initial set of coefficients (***A***⁺) and the second initial set of coefficients (***w***⁺).

13. The apparatus () according to any preceding claim, wherein the coherent receiver is implemented at an Optical Line Terminal, OLT, or at an Optical Network Unit, ONU.

14. A method, comprising:
- obtaining a first set of coefficients (***w***⁺, ***A***⁺⁺) indicating a first filter ***(w, A)*** in an adaptive equalizer of the coherent receiver, wherein the first filter ***(w, A)*** is an adaptive Multi-Input Multi-Output, MIMO, filter with N taps in each branch, wherein N is an integer number;
- determining a further set of coefficients indicating a MIMO filter with a single tap in each branch based on the first set of coefficients (***w***⁺, ***A***⁺⁺);
- determining a first matrix **(F)** based on the further set of coefficients;
- orthogonalizing the first matrix **(F),** thereby obtaining an orthogonalized matrix **(Q);**
- determining a state-of-polarization based on at least part of the orthogonalized matrix **(Q).**

15. A computer program comprising instructions for causing an apparatus to perform at least the following:
- obtaining a first set of coefficients (***w***⁺, ***A***⁺⁺) indicating a first filter ***(w, A)*** in an adaptive equalizer of the coherent receiver, wherein the first filter ***(w, A)*** is an adaptive Multi-Input Multi-Output, **MIMO,** filter with N taps in each branch, wherein N is an integer number;
- determining a further set of coefficients indicating a **MIMO** filter with a single tap in each branch based on the first set of coefficients (***w***⁺, ***A***⁺⁺);
- determining a first matrix (F) based on the further set of coefficients;
- orthogonalizing the first matrix (F), thereby obtaining an orthogonalized matrix **(Q);**
- determining a state-of-polarization based on at least part of the orthogonalized matrix **(Q).**
